# EUROPEAN PATENT SPECIFICATION

(11) **EP 1 230 847 B1**
(45) Date of publication and mention of the grant of the patent: **10.03.2004**
(21) Application number: 01204925.0
(22) Date of filing: 17.12.2001
(51) Int. Cl.: A01K 5/02

(54) **A device for supplying fodder to animals**
Tierfutterverteilvorrichtung
Appareil de livraison de fourrage aux animaux

(30) Priority: 12.02.2001 NL 1017337
(43) Date of publication of application: 14.08.2002
(73) Proprietor: Lely Enterprises AG, 6300 ZUG (CH)
(72) Inventor: Voogd, Lucien Eliza Niels, 4143 HG Leerdam (NL)
(74) Representative: Corten, Maurice Jean F.M.

(56) References cited:
- EP-A- 0 677 245
- EP-A- 0 885 560
- WO-A-00/38506
- WO-A-99/07215
- DE-A- 19 756 367
- NL-C- 1 010 898
- US-A- 5 069 165

## Description

The invention relates to a device for supplying fodder to animals according to the preamble of claim 1.

Such a device is known from Dutch patent application 1010898. Although this known device functions properly in practice, it appears that, in order to guarantee proper sanitary conditions of the device, a regular cleaning of the device is desirable. This cleaning takes much time and entails costs, while the device cannot be used during cleaning.

It is an object of the invention to obviate the drawbacks related to the cleaning at least partially.

For that purpose a device for supplying fodder to animals of the above-described type according to the invention comprises the measures according to the characterizing part of claim 1. The invention is based on the insight that, in particular when there is supplied rather wet or sticky fodder by the known device, parts of the fodder remain on components of the device, such as the receptacle or the conveying means, and contaminate these, so that regular cleaning of the device is desirable. By first wrapping up the fodder, according to the invention, in at least substantially non-sticky, edible separating material, the contamination of the device is considerably reduced, and the number of times cleaning has to take place is drastically reduced.

It is in particular advantageous when the edible separating material is constituted by an amount of dry fodder. In this respect maize could be taken into account for example. The edible separating material is preferably constituted by grass.

An embodiment of a device according to the invention is characterized in that the receptacle is provided with a weighing device for measuring fodder present in the receptacle. By means of said weighing device it is possible to establish the amount of fodder that can be supplied to the feeding trough.

In a preferred embodiment the second conveyor is constituted by a fall pipe respectively a fall chute, in other words, the receptacle is located above the feeding trough. Consequently, there is no separate drive mechanism required for conveying the fodder, because the gravitational force causes the fodder to flow to the feeding trough.

Although the fodder can be taken out of the receptacle by means of a separate taking-out device, for the sake of simplicity of the construction it is advantageous when there is not used a separate device for taking out. There may be used a tiltable receptacle, fodder falling from said receptacle after the latter has been tilted. However, for improving the hygienic use of the device, the receptacle has preferably a bottom which is adapted to be opened. The receptacle is preferably provided with a control means for controlling the opening of the bottom.

An extremely hygienic use of the device according to the invention is obtained when the receptacle has such a shape that, when a package of fodder and edible separating material falls through the bottom, the edible separating material surrounds the fodder at least partially. In this situation there may be applied in particular receptacles narrowing in downward direction.

A device according to the invention can be applied inter alia to milking robots. However, the invention is in particular advantageous when the device is constituted by a feeding column, in which situation several animals can make use of the device at the same time. For that purpose the feeding column is provided in a manner known per se with various feeding troughs that may be disposed side by side for example.

A compact device is obtained when the feeding column is provided with a framework located around the central axis, to which framework substantially the feeding troughs and hoppers are fitted.

A preferred embodiment of a device according to the invention is characterized in that the device is provided with identification means for identifying an individual animal, so that the device can function automatically. For feeding animals by means of the device, the individual animal is identified, after which the fodder is composed with the aid of a metering device from ingredients originating from one or more hoppers, according to the nutritive need of the individual animal, and the fodder is supplied to the feeding trough via the receptacle and the conveying means. By means of the weighing device the amount of fodder can be attuned to the nutritive need of the individual animal. In this situation the control means preferably controls the functioning of the relevant components of the device.

A preferred embodiment of a device according to the invention is characterized in that the device comprises various hoppers, each for containing a stock of a particular kind of fodder, and in that the device is provided with a control means, said control means comprising a memory with a correspondence table with values in relation to the adhesiveness factor of the kinds of fodder, the control means controlling the device in such a manner that the kinds of fodder are supplied to the receptacle in the order of increasing adhesiveness factor. Thus, with the aid of the control means first the least adhesive fodder is supplied to the receptacle. The device according to the invention has the additional advantage of enabling to wrap minerals and/or medicines in the fodder. These are preferably added last to the fodder, so that the medicines and/or minerals stick to the most adhesive fodder and will be brought at a high degree of certainty into the feeding trough where they can be taken by the animal.

The invention will now be further elucidated with reference to the embodiment shown in the drawing in which:

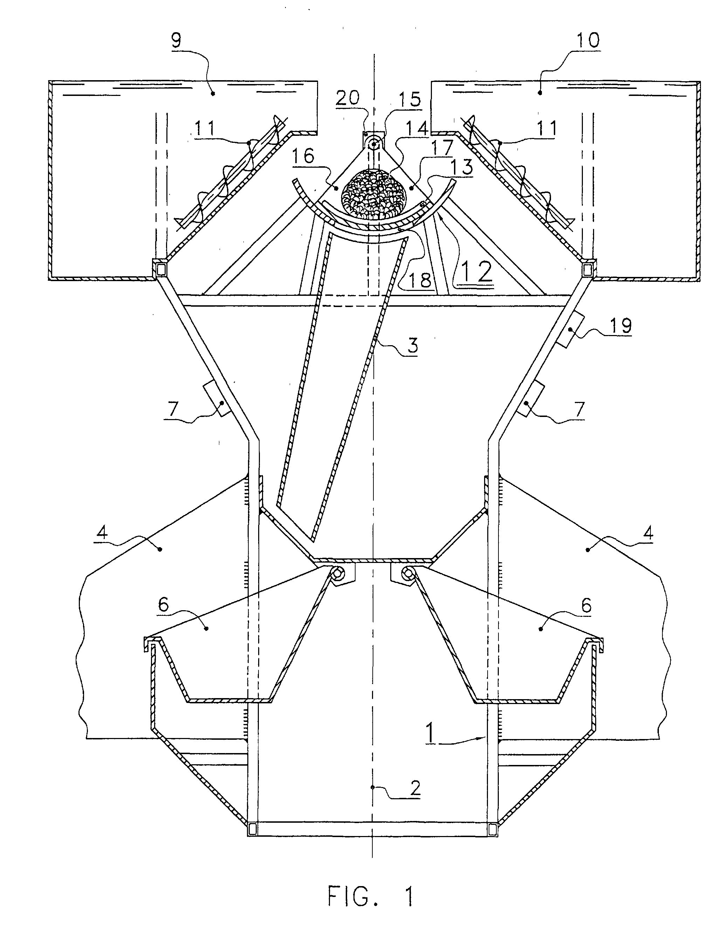

Figure 1 is a schematic cross-section of an embodiment according to the invention.

In the embodiment shown in Figure 1 a framework 1 is disposed around a central axis 2, said framework 1 having a substantially circular circumference. At the upper side of the framework 1 there are provided hoppers 9, 10. For that purpose not further shown facilities are fitted to the framework 1 for placing the hoppers 9, 10.

The framework 1 may be provided with partition walls 4 that are detachably fitted to the framework 1.

Feeding troughs 6 for the animals are disposed in circular arrangement in the lower part of the device. As a result of the geometry of the device, in the embodiment shown constituted by a feeding column, it is achieved that the construction occupies few space, while the accessibility of the feeding column to the animals is optimal from all directions.

The feeding column is further provided with conveying means comprising a first conveyor 11 and a second conveyor 3 for conveying fodder from the hopper 9, respectively 10 to the relevant feeding trough 6. A receptacle 12, centrally arranged in the embodiment shown, receives an amount of fodder which is conveyed by the first conveyor 11 from the hopper 9, 10 to the receptacle 12. As a first conveyor 11, an auger, gripper, belt conveyor or any other device known per se for conveying fodder may be used.

A second conveyor 3, preferably constituted by a fall pipe respectively a fall chute, is adapted to convey the amount of fodder from the receptacle 12 to the relevant feeding trough 6. For the purpose of conveying the fodder to the relevant feeding trough 6 it is advantageous when the fall pipe 3 is rotatably mounted in the feeding column.

According to the invention the feeding column is provided with a container, in the embodiment shown e.g. the hopper 10, for containing at least substantially non-sticky, edible separating material. Said separating material may be constituted e.g. by dry fodder, in particular grass.

The first conveyor 11 supplies a certain amount of said separating material to the receptacle 12, where it will be situated as a kind of bed 13 on the bottom of the receptacle 12.

When the bed 13 has been laid on the bottom, the first conveyor 11 of the hopper 9 is driven for supplying a certain amount of e.g. rather sticky or wet fodder to the receptacle, where said amount of fodder 14 will be situated on the bed 13.

For the purpose of conveying the package consisting of the bed 13 and the amount of fodder 14 to the fall pipe 3, the receptacle 12 is provided with a bottom which is adapted to be opened. In the embodiment shown this is realised in that the bottom of the receptacle 12 has two halves 16 and 17 which are hingeable about an axis 15. When the halves 16, 17 move away from each other, there is thus created a fall opening 18 through which the package falls into the fall chute 3.

The device comprises a control means 19 for controlling the opening of the bottom. Preferably said control means 19 also controls the operation sequence of the first and second conveyors 11 respectively 3, so that first the edible separating material and then the amount of fodder will land in the receptacle 12.

Due to the fact that the amount of fodder 14 lies on the bed 13 of separating material, e.g. a grass bed, in the case that the fodder is sticky, at least substantially no parts of fodder will adhere to the components of the device that could come into contact with the fodder. Moreover, the package of fodder and separating material remains interesting for an animal to eat.

An extremely hygienic use of the device according to the invention is obtained when the receptacle 12 has such a shape that, when the package of fodder 14 and the bed 13 of edible separating material falls through the bottom, the bed 13 of edible separating material will surround at least partially the fodder 14. In this situation there may be applied in particular receptacles 12 narrowing in downward direction, while a desired shape can simply be determined by standard trial and error experiments.

There are provided identification means 7 for identifying an individual animal. In the embodiment shown the identification means 7 are fitted to the framework 1, but it will be obvious that the identification means may also be disposed at other places, such as e.g. the feeding troughs 6. With the aid of the identification means 7 the identity of an animal present near a feeding trough 6 is automatically established. By means of correspondence tables stored in the memory of e.g. the control means 19 the amount of fodder destined for that animal can be supplied. By means of a weighing device 20 known per se this amount can be determined. With the aid of data from the animal identification means 7 the control means 19 further controls the movement of the fall pipe 3 so that the latter is located above the right feeding trough 6. The control means 19 further controls the drive of the conveyors 11.

When there are provided various hoppers, each for containing stock of a particular kind of fodder, by means of a correspondence table stored in its memory with values in relation to the adhesiveness factor of each kind of fodder, in other words the extent to which each kind of fodder adheres, the control means 19 can control the device in such a manner that the kinds of fodder are supplied to the receptacle in the order of increasing adhesiveness factor. Moreover, the amount of dry fodder to be added can be attuned to the adhesiveness of the kind of fodder to be supplied.

## Claims

1. A device for supplying fodder (13, 14) to animals, such as cows, the device being provided with:
a hopper (9, 10) for containing a stock of fodder (13, 14),
a feeding trough (6) which is accessible to an animal,
conveying means (3, 11) for conveying fodder (13, 14) from the hopper (9, 10) to the feeding trough (6), and
a receptacle (12), the conveying means comprising a first conveyor (11) for conveying an amount of fodder (13, 14) from the hopper (9, 10) to the receptacle (12) and a second conveyor (3) for conveying the amount of fodder (13, 14) from the receptacle (12) to the feeding trough (6),
**characterized in that** the device is provided with a container (10) for containing edible separating and/or packaging material (13), with supply means (11) for supplying the edible separating material (13) to the receptacle (12), and **in that** the device comprises a control means (19) for first performing the supply of the edible separating material (13) to the receptacle (12) and then performing the conveyance of fodder (14) from the hopper (9) to the receptacle (12), the edible separating material (13) being constituted by a material that at least substantially does not adhere to components of the device.

2. A device as claimed in claim 1, **characterized in that** the edible separating material (13) is constituted by an amount of dry fodder.

3. A device as claimed in claim 1 or 2, **characterized in that** the edible separating material (13) is constituted by grass.

4. A device as claimed in any one of the preceding claims, **characterized in that** the receptacle (12) is provided with a weighing device (20) for measuring the fodder (13, 14) present in the receptacle (12).

5. A device as claimed in any one of the preceding claims, **characterized in that** the second conveyor is constituted by a fall pipe respectively a fall chute (3).

6. A device as claimed in claim 5, **characterized in that** the receptacle (12) has a bottom which is adapted to be opened.

7. A device as claimed in claim 6, **characterized in that** there is provided a control means (19) for controlling the opening of the bottom of the receptacle (12).

8. A device as claimed in claim 6 or 7, **characterized in that** the receptacle (12) has such a shape that, when a package of fodder (14) and edible separating material (13) falls through the bottom, the edible separating material (13) surrounds at least partially the fodder (14).

9. A device as claimed in any one of the preceding claims, **characterized in that** the device is constituted by a feeding column.

10. A device as claimed in claim 9, **characterized in that** the feeding column is provided with a framework (1) located around a central axis (2), to which framework (1) there are fitted feeding troughs (6) and hoppers (9, 10).

11. A device as claimed in any one of the preceding claims, **characterized in that** the device is provided with identification means (7) for identifying an individual animal.

12. A device as claimed in any one of the preceding claims, **characterized in that** the device comprises various hoppers (9, 10), each for containing a stock of a particular kind of fodder, and **in that** the device is provided with a control means (19), the control means (19) comprising a memory with a correspondence table with values in relation to the adhesiveness factor of the kinds of fodder, the control means (19) controlling the device in such a manner that the kinds of fodder are supplied to the receptacle (12) in the order of increasing adhesiveness factor.

## Patentansprüche

1. Vorrichtung zum Zuführen von Futter (13, 14) zu Tieren, wie z. B. Kühen, wobei die Vorrichtung versehen ist mit:
einem Vorratsbehälter (9, 10) zur Aufnahme eines Vorrates an Futter (13, 14),
einem Futtertrog (6), zu dem ein Tier Zutritt hat,
Fördervorrichtungen (3, 11) zum Befördern von Futter (13, 14) vom Vorratsbehälter (9, 10) zum Futtertrog (6) und
einem Behälter (12), wobei die Fördervorrichtungen einen ersten Förderer (11) zum Befördern einer Menge an Futter (13, 14) vom Vorratsbehälter (9, 10) zum Behälter (12) und einen zweiten Förderer (3) zum Befördern der Menge an Futter (13, 14) vom Behälter (12) zum Futtertrog (6) umfassen,
**dadurch gekennzeichnet, daß** die Vorrichtung mit einem Behälter (10) zur Aufnahme von eßbarem Trenn- und/oder Verpackungsmaterial (13) und mit Zuführvorrichtungen (11) zum Zuführen des eßbaren Trennmaterials (13) zu dem Behälter (12) versehen ist, und daß die Vorrichtung eine Steuervorrichtung (19) umfaßt, um zuerst die Zuführung des eßbaren Trennmaterials (13) zu dem Behälter (12) und dann die Beförderung von Futter (14) vom Vorratsbehälter (9) zu dem Behälter (12) durchzuführen, wobei das eßbare Trennmaterial (13) durch ein Material gebildet ist, das zumindest im wesentlichen nicht an Komponenten der Vorrichtung haftet.

2. Vorrichtung nach Anspruch 1,
**dadurch gekennzeichnet, daß** das eßbare Trennmaterial (13) durch eine Menge an Trockenfutter gebildet ist.

3. Vorrichtung nach Anspruch 1 oder 2,
**dadurch gekennzeichnet, daß** das eßbare Trennmaterial (13) durch Gras gebildet ist.

4. Vorrichtung nach einem der vorhergehenden Ansprüche,
**dadurch gekennzeichnet, daß** der Behälter (12) mit einer Wiegevorrichtung (20) versehen ist, um das in dem Behälter (12) befindliche Futter (13, 14) zu messen.

5. Vorrichtung nach einem der vorhergehenden Ansprüche,
**dadurch gekennzeichnet, daß** der zweite Förderer durch ein Fallrohr bzw. einen Fallschacht (3) gebildet ist.

6. Vorrichtung nach Anspruch 5,
**dadurch gekennzeichnet, daß** der Behälter (12) einen Boden hat, der geöffnet werden kann.

7. Vorrichtung nach Anspruch 6,
**dadurch gekennzeichnet, daß** eine Steuervorrichtung (19) zum Steuern der Öffnung des Bodens des Behälters (12) vorgesehen ist.

8. Vorrichtung nach Anspruch 6 oder 7,
**dadurch gekennzeichnet, daß** der Behälter (12) eine solche Form hat, daß beim Hindurchfallen eines Pakets aus Futter (14) und eßbarem Trennmaterial (13) durch den Boden das eßbare Trennmaterial (13) das Futter (14) zumindest teilweise umgibt.

9. Vorrichtung nach einem der vorhergehenden Ansprüche,
**dadurch gekennzeichnet, daß** die Vorrichtung durch eine Futtersäule gebildet ist.

10. Vorrichtung nach Anspruch 9,
**dadurch gekennzeichnet, daß** die Futtersäule mit einem um eine Mittelachse (2) angeordneten Rahmen (1) versehen ist, wobei an dem Rahmen (1) Futtertröge (6) und Vorratsbehälter (9, 10) angebracht sind.

11. Vorrichtung nach einem der vorhergehenden Ansprüche,
**dadurch, gekennzeichnet, daß** die Vorrichtung mit einer Identifikationsvorrichtung (7) zum Identifizieren eines einzelnen Tieres versehen ist.

12. Vorrichtung nach einem der vorhergehenden Ansprüche,
**dadurch gekennzeichnet, daß** die Vorrichtung mehrere Vorratsbehälter (9, 10) umfaßt, die jeweils einen Vorrat einer bestimmten Sorte von Futter enthalten, und daß die Vorrichtung mit einer Steuervorrichtung (19) versehen ist, wobei die Steuervorrichtung (19) einen Speicher mit einer Korrespondenztabelle umfaßt, die Werte bezüglich des Haftungsfaktors der Futtersorten enthält, wobei die Steuervorrichtung (19) die Vorrichtung derart steuert, daß die Futtersorten dem Behälter (12) in der Reihenfolge eines zunehmenden Haftungsfaktors zugeführt werden.

## Revendications

1. Dispositif permettant de fournir des denrées fourragères (13, 14) à des animaux, tels que des vaches, le dispositif étant équipé :
d'une trémie (9, 10) destinée à contenir un stock de denrées fourragères (13, 14),
d'une auge (6) qui est accessible à un animal,
de moyens de transport (3, 11) destinés à transporter les denrées fourragères (13, 14) depuis la trémie (9, 10) vers l'auge (6), et
d'un réceptacle (12), les moyens de transport comprenant un premier convoyeur (11) destiné à transporter une quantité de denrées fourragères (13, 14) depuis le réceptacle (12) vers l'auge (6),
**caractérisé en ce que** le dispositif est équipé d'un conteneur (10) destiné à contenir un matériau comestible de séparation et/ou d'emballage (13), avec des moyens d'alimentation (11) destinés à amener le matériau de séparation comestible (13) vers le réceptacle (12), et **en ce que** le dispositif comprend un moyen de commande (19) pour amener d'abord le matériau de séparation comestible (13) vers le réceptacle (12) et pour réaliser ensuite le transport des denrées fourragères (14) depuis la trémie (9) vers le réceptacle (12), le matériau de séparation comestible (13) étant constitué d'un matériau qui au moins sensiblement n'adhère pas aux composants du dispositif.

2. Dispositif selon la revendication 1, **caractérisé en ce que** le matériau de séparation comestible (13) est constitué d'une quantité de denrées fourragères sèches.

3. Dispositif selon la revendication 1 ou 2, **caractérisé en ce que** le matériau de séparation comestible (13) est constitué d'herbe.

4. Dispositif selon l'une quelconque des revendications précédentes, **caractérisé en ce que** le réceptacle (12) est équipé d'un dispositif de pesage (20) destiné à mesurer les denrées fourragères (13, 14) présentes dans le réceptacle (12).

5. Dispositif selon l'une quelconque des revendications précédentes, **caractérisé en ce que** le second convoyeur est constitué d'un tuyau de descente respectivement d'une goulotte de descente (3).

6. Dispositif selon la revendication 5, caractérisé en ce le réceptacle (12) présente une partie inférieure qui est adaptée pour être ouverte.

7. Dispositif selon la revendication 6, **caractérisé en ce qu'**il est prévu des moyens de commande (19) destinés à commander l'ouverture de la partie inférieure du réceptacle (12).

8. Dispositif selon la revendication 6 ou 7, **caractérisé en ce que** le réceptacle (12) présente une forme telle que, lorsqu'un ensemble de denrées fourragères (14) et de matériau de séparation comestible (13) tombe à travers la partie inférieure, le matériau de séparation comestible (13) entoure au moins partiellement les denrées fourragères (14).

9. Dispositif selon l'une quelconque des revendications précédentes, **caractérisé en ce que** le dispositif est constitué d'une colonne d'alimentation.

10. Dispositif selon la revendication 9, **caractérisé en ce que** la colonne d'alimentation est équipée d'un châssis (1) situé autour d'un axe central (2), sur lequel châssis (1) des auges (6) et des trémies (9, 10) sont fixées.

11. Dispositif selon l'une quelconque des revendications précédentes, **caractérisé en ce que** le dispositif est équipé de moyens d'identification (7) destinés à identifier un animal individuel.

12. Dispositif selon l'une quelconque des revendications précédentes, **caractérisé en ce que** le dispositif comprend diverses trémies (9, 10), chacune destinée à contenir un stock d'un type particulier de denrées fourragères, et **en ce que** le dispositif est équipé de moyens de commande (19), les moyens de commande (19) comprenant une mémoire avec un tableau de correspondance avec des valeurs par rapport au facteur d'adhésivité des types de denrées alimentaires, les moyens de commande (19) commandant le dispositif de telle sorte que les types de denrées alimentaires sont fournis au réceptacle (12) dans l'ordre du facteur d'adhésivité croissant.
